# DEMANDE DE BREVET EUROPEEN

(11) **EP 3 738 868 A1**
(43) Date de publication de la demande: **18.11.2020**
(21) Numéro de dépôt: 20172542.1
(22) Date de dépôt: 30.04.2020
(51) Int. Cl.: B62K 3/00, B62H 5/00, B62M 6/65, B62J 11/00, B62M 6/40, B62J 45/40, B62J 50/21, B62K 15/00

(54) **TROTTINETTE SÉCURISABLE**

(30) Priorité: 13.05.2019 FR 1904955
(71) Demandeur: Bigben Connected, 59273 Fretin (FR)
(72) Inventeur: FALC, Alain, 59273 Fretin (FR); BASSOT, Michel, 59273 Fretin (FR); BOYER, Stéphanie, 59273 Fretin (FR); ROULEAUD, Victoria, 59273 Fretin (FR)
(74) Mandataire: Vigand, Philippe

(57) **Abrégé**

Trottinette (100), comprenant :
• Un châssis (110) pourvu d'une surface (111) adaptée pour recevoir un pied d'un utilisateur,
• Une roue arrière (131) fixée centralement à une extrémité arrière (130) du châssis,
• Des moyens de direction (140) comprenant un guidon (141) et une roue avant (142) et fixés centralement à une extrémité avant (120) du châssis,
caractérisé en ce que
le châssis (110) comprend au moins un trou traversant (150) agencé pour accueillir une portion d'un antivol ou d'une chaine.

## Description

La présente invention concerne un véhicule à roulettes du type trottinette ou patinette, permettant de transporter un utilisateur par le biais de la force musculaire de l'utilisateur et/ou de moyens de propulsion électrique.

### Domaine technique de l'invention

Les trottinettes sont des moyens de transport utilisés de plus en plus souvent comme moyen de transport utilitaire et sont désormais perçues comme vecteur de mobilité douce en particulier dans l'espace urbain.

Cette utilisation en moyen de transport utilitaire s'accompagne de la nécessité de parquer la trottinette quand elle n'est pas utilisée, par exemple à proximité d'un lieu public comme un parc, une bibliothèque ou un magasin.

Cependant, les trottinettes comprennent généralement de petites roues et des éléments pleins de petites tailles, ce qui rend leur fixation à un mobilier urbain par une chaine ou un antivol peu pratique ou inefficace.

Le vol de trottinette est donc souvent aisé et a tendance à augmenter, ce qui est dommageable en particulier dans le cas de trottinettes coûteuses comme des trottinettes à propulsion électriques et/ou des trottinettes pourvues de technologies connectées.

### État de la technique

Le document FR3030436 décrit ainsi une trottinette d'un type connu ne permettant pas de l'attacher facilement à un mobilier urbain comme un poteau ou un arceau. Cette trottinette est donc peu pratique à parquer et difficilement sécurisable.

### Présentation de l'invention

Un but de la présente invention est de proposer une trottinette facilement sécurisable à un mobilier urbain ou tout autre élément sans pour autant augmenter le poids ou dégrader la solidité ou la praticité de la trottinette.

Pour cela un aspect de l'invention concerne une trottinette, comprenant :
- un châssis pourvu d'une surface adaptée pour recevoir au moins un pied d'un utilisateur,
- une roue arrière fixée centralement à une extrémité arrière du châssis,
- des moyens de direction comprenant un guidon et une roue avant et fixés centralement à une extrémité avant du châssis,
caractérisé en ce que le châssis comprend au moins un trou traversant agencé pour accueillir une portion d'un antivol ou d'une chaine.

Un tel trou traversant, c'est-à-dire donnant accès d'une face à l'autre du châssis préférentiellement plat de la trottinette, permet de sécuriser facilement la trottinette selon la présente invention à un mobilier urbain comme un anneau, un lampadaire ou un banc ou tout autre élément fixe grâce à un antivol comme un U, un câble ou encore une chaine. Ainsi, le trou traversant constitue un moyen de sécurisation passif permettant de sécuriser la présente trottinette sans l'alourdir d'un élément supplémentaire et sans dégrader ses conditions d'utilisation.

Avantageusement, le trou traversant est agencé sur une des extrémités avant ou arrière du châssis de manière décentrée, par exemple d'un axe reliant la roue arrière aux moyens de direction, c'est-à-dire d'un axe longitudinal central de la trottinette. Ainsi, le trou traversant ne détériore pas la résistance mécanique du châssis de la trottinette et peut être en plus réalisé plus facilement. Par exemple, le trou traversant est agencé en dehors de la surface adaptée pour recevoir le pied de l'utilisateur.

De manière avantageuse, le châssis est formé d'une portion de tôle inférieure et d'une portion de tôle supérieure dépassant de la portion de tôle inférieure et le trou traversant est formé uniquement au travers de la portion de tôle supérieure, de manière à simplifier la fabrication de la trottinette. Par exemple, les deux portions de tôles sont planes et parallèles et la portion de tôle supérieure dépasse de la portion de tôle inférieure en largeur et/ou en longueur, la longueur s'entendant selon la longueur de la trottinette.

En outre, le bord de la portion de tôle supérieure dépassant de la portion de tôle inférieure peut être relié à la portion de tôle inférieure par une aile et le trou traversant est alors également agencé dans cette aile.

Avantageusement, le trou traversant est agencé sur l'extrémité avant du châssis, par exemple à proximité des moyens de direction.

De manière spécialement avantageuse, les moyens de direction comprennent en outre une colonne de direction reliant le guidon à la roue avant ainsi qu'un bras fixant la colonne de direction à l'extrémité avant du châssis plat, et le trou traversant est agencé sur l'extrémité avant du châssis de manière décentrée par rapport au dit bras.

Avantageusement, le châssis comprend en outre une batterie et un moteur électrique agencés pour motoriser la trottinette.

Avantageusement, la trottinette comprend en outre des moyens de communication avec ou sans fil permettant de communiquer avec un terminal dédié ou un appareil mobile.

Avantageusement, la présente trottinette comprend en outre des moyens de localisation par satellite permettant de localiser la trottinette en utilisation ou à distance via les moyens de communication sans-fil.

Avantageusement, le guidon est pourvu d'un support pour appareil mobile fixé à demeure et permettant d'accueillir et préférentiellement de recharger un appareil mobile comme un téléphone intelligent ou une tablette. Par exemple, le support pour appareil mobile est soudé au guidon de sorte à faire corps avec la trottinette.

En outre, un autre aspect de l'invention concerne une trottinette, comprenant :
- un châssis de forme parallélépipédique ou rectangle définissant quatre coins,
- une roue arrière fixée centralement à une extrémité arrière du châssis,
- des moyens de direction comprenant un guidon et une roue avant et fixés centralement à une extrémité avant du châssis,
caractérisé en ce que le châssis comprend au moins un trou traversant agencé pour accueillir une portion d'un antivol ou d'une chaine, par exemple formé dans au moins un des quatre coins du châssis.

Avantageusement, au moins une partie des quatre coins sont arrondis. En outre, le présent aspect de l'invention peut comprendre toutes les caractéristiques avantageuses de l'aspect de l'invention précédemment décrit.

### Description des dessins

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente une vue de dessus d'une trottinette selon la présente invention,
[fig. 2] représente une vue détaillée d'une portion avant de la trottinette selon la figure 1,
[fig. 3] représente une vue de trois quarts d'une trottinette selon la figure 1.

### Description détaillée de l'invention

La présente invention concerne une trottinette de tout type, par exemple une trottinette particulière ou une trottinette collective, empruntable uniquement sur abonnement. En outre, la présente trottinette peut être propulsée par l'utilisateur ou bien par des moyens de propulsion électrique.

En référence à ces dessins, la trottinette 100 selon la présente invention comprend un châssis 110 ayant par exemple une forme plane et pourvu d'une surface 111 adaptée pour recevoir un pied d'un utilisateur de la trottinette 100. Par exemple, la surface 111 est plane et/ou comprend un revêtement configuré pour maintenir un haut degré de friction avec le pied ou la chaussure de l'utilisateur, comme connu de l'homme du métier.

Le châssis 110 comprend une extrémité avant 120 et une extrémité arrière 130 qui peuvent être agencées de part et d'autre de la surface 111. L'extrémité avant 120 accueille en son centre, c'est-à-dire selon un axe central longitudinal de la trottinette 100 ou encore au centre d'une largeur de l'extrémité avant 120, des moyens de direction 140.

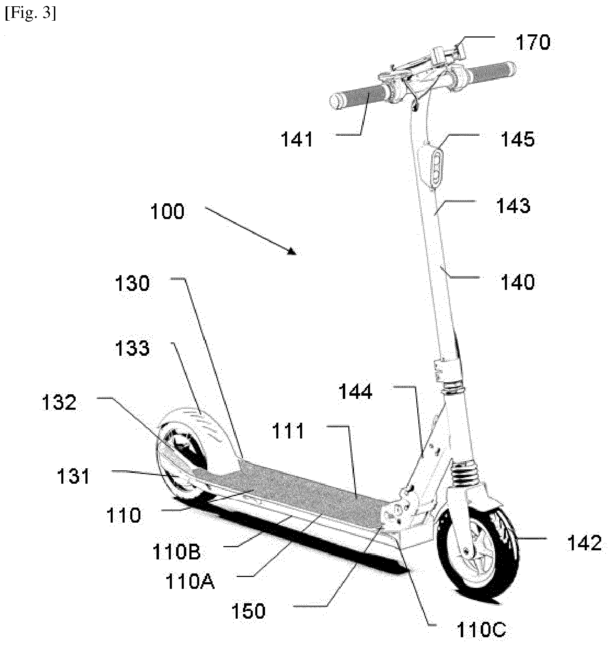

Les moyens de direction 140 comprennent un guidon 141, une roue avant 142 et une colonne de direction 143 reliant le guidon 141 à la roue avant 142. En outre, un bras 144 fixe la colonne de direction 143 au centre de l'extrémité avant 120 du châssis 110 de manière à autoriser un pivot de la colonne de direction 143 et donc de la roue avant 142 par rapport au châssis 110 afin de diriger la trottinette 100. Un phare avant 145 peut en outre être monté sur la colonne de direction 143 (visible sur la figure 3) et/ou sur le guidon 141.

L'extrémité arrière 130 reçoit une roue arrière 131 fixée en son centre, c'est-à-dire selon un axe central longitudinal de la trottinette 100 ou encore au centre d'une largeur de l'extrémité arrière 130 et peut accueillir un frein à pied 132 situé au-dessus de la roue arrière 131 ainsi qu'un phare arrière 133 agencé par exemple de part et d'autre de la roue arrière 131. Préférentiellement, l'extrémité avant 120 et l'extrémité arrière 130 sont alignées selon le même axe longitudinal du châssis 110 et de la trottinette 100.

Le châssis 110 comprend en outre un moyen de sécurisation passif sous la forme d'un trou traversant 150 agencé préférentiellement de manière décentrée sur l'extrémité avant 120. Par exemple, ce trou traversant est situé entre les moyens de direction 140 ou le bras 144 et un bord extérieur du châssis 110 et/ou entre la surface 111 et un bord avant du châssis 110.

Ce trou traversant 150 a un diamètre suffisant pour y passer un antivol ou un câble de sécurité, par exemple au moins 1 cm et préférentiellement au moins 1,5 cm ou au moins 2 cm. Le diamètre du trou traversant 150 peut être limité par la largeur du châssis et la largeur du bras 144 et peut être d'au plus 10 cm, au plus 7 cm ou encore au plus 5 cm.

Ce trou traversant 150 constitue un moyen de sécurisation passif efficace et peu coûteux pour la trottinette 100 puisqu'une simple perforation du châssis 110 est requise alors que l'épaisseur des tôles formant le châssis prévient toute détérioration de ce moyen de sécurisation. De plus, l'agencement préférentiel du trou traversant 150 dans une des extrémités du châssis 110 comme l'extrémité avant prévient toute détérioration de la résistance mécanique du châssis 110 puisqu'il est alors placé en dehors d'une zone du châssis 110 soumis à des forces de flexion.

Ce trou traversant 150 est ainsi idéalement positionné pour permettre une fixation facile de la trottinette 100 à un mobilier urbain ou tout autre élément fixe. Enfin, le trou traversant 150 permet de ne pas alourdir la trottinette 100 par un dispositif supplémentaire et donc de préserver sa praticité et sa mobilité, c'est-à-dire sans dégrader les conditions d'utilisation de la trottinette 100.

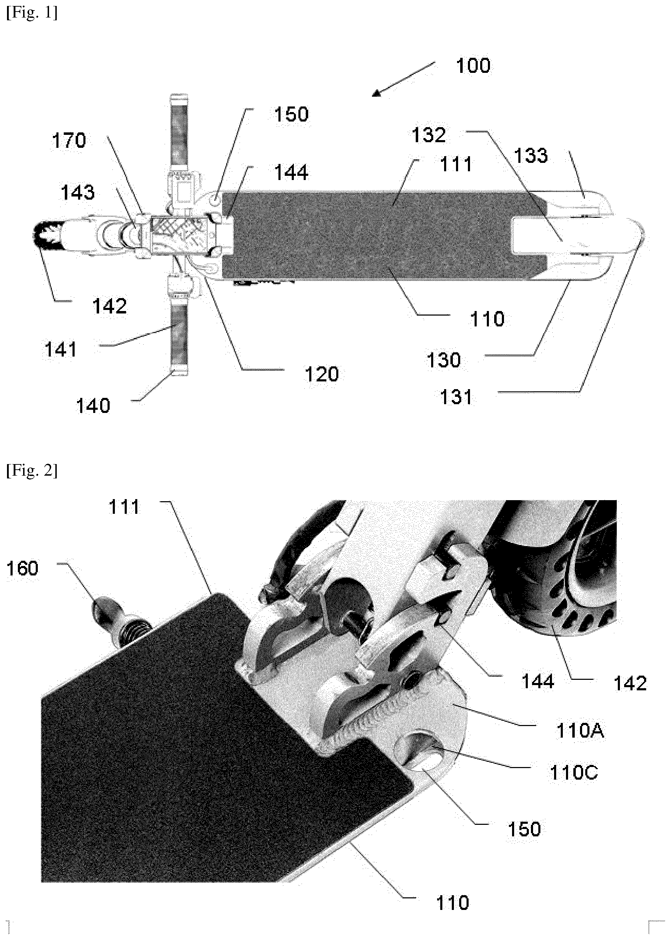

En référence à la figure 2, le châssis 110 peut être formé de deux portions de tôles plates superposée et/ou parallèle, la portion de tôle supérieure 110A dépassant en largeur et/ou en longueur de la portion de tôle inférieure 110B (non visible sur les figures 1 et 2) de manière à offrir une surface 111 de plus grande largeur. La portion de tôle supérieure 110A et en particulier son bord extérieur peut être relié à la portion de tôle inférieure 110B par une aile 110C, c'est-à-dire une portion de tôle longitudinale présentant un rayon de courbure perpendiculaire à l'axe longitudinal de la trottinette 100. Cette aile 110C permet de renforcer la résistance mécanique de la portion de tôle supérieure 110A, en particulier sa partie dépassant de la portion de tôle inférieure 110B.

Le trou traversant 150 peut être agencé uniquement dans la portion de tôle supérieure 110A et préférentiellement dans la portion de tôle supérieure 110A ainsi que dans l'aile 110C. Cet agencement préférentiel permet de maintenir à la fois la résistance mécanique du châssis 110 et celle du trou traversant 150 sans augmenter le poids de la trottinette 100.

En outre, le bras 144 peut être muni d'une charnière comme visible sur la figure 2 de manière à replier la colonne de direction 143 au-dessus du châssis 110, par exemple de manière parallèle. En outre, une béquille 160 peut être fixée au châssis 110 de manière à maintenir une station debout de la trottinette 100 lorsqu'elle est arrêtée.

Enfin, une batterie ainsi qu'une électronique de commande peuvent être logées entre la portion de tôle supérieure 110A et la portion de tôle inférieure 110B du châssis 110, de manière à commander un moteur électrique logé dans ou à proximité de la roue arrière 131 (non représentés). Des éléments de commande peuvent être placés sur le guidon 141 ainsi qu'un écran de contrôle affichant des paramètres de roulage comme la vitesse de la trottinette 100 ou bien l'autonomie restante.

Des moyens de localisation par satellite, par exemple un capteur GPS, Glonass, Beidu, Galileo et/ou des moyens de communication avec ou sans fil, par exemple GSM, Wi-Fi, Bluetooth, NFC, 4G, peuvent être en outre logés dans le châssis 110 pour localiser et/ou activer la trottinette 100 selon la présente invention.

Par ailleurs, un support d'appareil mobile 170 peut être fixé préférentiellement à demeure au guidon 141, par exemple de manière centrée comme représentée sur les figures 1 et 3. Ce support d'appareil mobile 170 peut être configuré pour recevoir un appareil mobile en le tenant par ses quatre coins, par quatre bras télescopiques équipés chacun d'une encoche disposée aux quatre sommets ou aux quatre bords d'un quadrilatère imaginaire. Dans le mode de réalisation représenté sur les figures, les quatre encoches sont agencées aux quatre coins d'un rectangle imaginaire, de manière à offrir la meilleure tenue possible de l'appareil mobile.

Par exemple, le support pour appareil mobile 170 peut offrir une charge de l'appareil mobile, par induction et/ou par câble. En outre, les moyens de communication avec ou sans fil de la trottinette 100 peuvent être configurés pour communiquer avec l'appareil mobile afin de lui transmettre des informations de roulage et/ou de localisation.

Ce support pour appareil mobile 170 offre donc une grande praticité de la trottinette 100, ainsi qu'un haut de niveau de sécurité quand il est fixé à demeure au guidon 141, par exemple soudé, puisqu'il permet d'éviter tout risque de vol du support pour appareil mobile 170.

De plus, des moyens de sécurité actifs peuvent être logés dans le châssis 110 et peuvent comprendre au moins un circuit logique et par exemple un capteur de déplacement, une sirène et/ou les moyens de localisation. Ainsi, un déplacement non autorisé de la trottinette 100 peut résulter en un bruit fort et désagréable, en un verrouillage du moteur ou de la roue arrière et/ou en une notification sur un appareil mobile distant ou sur un central de sécurité fixe.

De plus, des boutons pouvant être situés sur le guidon 141 ou sur un écran de commande agencé sur ce guidon 141 pour compléter ces moyens de sécurité actifs en autorisant à tout le moins une mise en route de la trottinette 100 par le circuit logique uniquement quand un code ou mot de passe approprié est entré.

De manière alternative ou en combinaison, les moyens de communication sans fil peuvent faire partie des moyens de sécurité actifs par exemple pour détecter la présence d'un appareil mobile autorisé par réseau Bluetooth et/ou NFC lors d'un mouvement ou d'une mise en route de la trottinette 100. Si un tel appareil mobile autorisé n'est pas reconnu, le circuit logique peut être programmé pour émettre un bruit fort et désagréable, pour verrouiller le moteur ou la roue arrière et/ou pour notifier un appareil mobile distant ou un central de sécurité fixe.

De manière alternative ou en combinaison, un capteur de présence d'antivol comme un capteur magnétique, optique ou mécanique agencé dans le trou traversant 150 peut faire partie des moyens de sécurité actifs, de manière à détecter toute tentative non autorisée de retirer un antivol passé dans le trou traversant 150, par exemple en l'absence d'un appareil mobile autorisé ou en l'absence d'un code ou mot de passe approprié.

On comprendra que diverses modifications et/ou améliorations évidentes pour l'homme du métier peuvent être apportées aux différents modes de réalisation de l'invention décrits dans la présente description sans sortir du cadre de l'invention. En particulier, il est fait référence au nombre de trous traversants qui n'est pas limité à un, mais peut comprendre deux, trois ou quatre trous traversants. Par exemple, un ou deux trous traversant peuvent être pourvus sur chacune des extrémités avant ou arrière, préférentiellement de manière décentrée ou de part et d'autre de la roue arrière et des moyens de direction.

En outre, de manière alternative ou en combinaison, des boucles d'attaches peuvent être fixées à demeure sur le châssis ou sur les moyens de direction pour permettre l'attache d'un antivol ou d'une chaine, préférentiellement au niveau d'une ou des extrémités avant ou arrière. Enfin, la présente trottinette peut être équipée d'un siège ou d'une selle.

Il est à noter que la description ci-dessus n'est pas limitative, et que les caractéristiques technique décrites ci-dessus aussi bien dans la description générale que dans la description détaillée peuvent être isolées les unes des autres ou combinées les unes aux autres, tant qu'il n'y a pas d'incohérence technique.

## Revendications

1. Trottinette (100), comprenant :
• un châssis (110) pourvu d'une surface (111) adaptée pour recevoir au moins un pied d'un utilisateur,
• une roue arrière (131) fixée centralement à une extrémité arrière (130) du châssis,
• des moyens de direction (140) comprenant un guidon (141) et une roue avant (142) et fixés centralement à une extrémité avant (120) du châssis,
dans laquelle
le châssis (110) comprend au moins un trou traversant (150) agencé pour accueillir une portion d'un antivol ou d'une chaine,
**caractérisée en ce que** le trou traversant (150) est agencé sur une des extrémités avant (120) ou arrière (130) du châssis de manière décentrée.

2. Trottinette (100) selon l'une des revendications précédentes, **caractérisée en ce que** le trou traversant (150) est agencé en dehors de la surface (111) adaptée pour recevoir le pied de l'utilisateur.

3. Trottinette (100) selon l'une des revendications précédentes, **caractérisée en ce que** le châssis (110) est formé d'une portion de tôle inférieure (110B) et d'une portion de tôle supérieure (110A) dépassant de la portion de tôle inférieure (110B) et **en ce que**, le trou traversant (150) est formé uniquement au travers de la portion de tôle supérieure (110A).

4. Trottinette (100) selon l'une des revendications précédentes, **caractérisée en ce que** le trou traversant (150) est agencé sur l'extrémité avant (120) du châssis (110).

5. Trottinette (100) selon l'une des revendications précédentes, **caractérisée en ce que** les moyens de direction (140) comprennent en outre une colonne de direction (143) reliant le guidon (141) à la roue avant (142) ainsi qu'un bras (144) fixant la colonne de direction (143) à l'extrémité avant (120) du châssis (110), et **en ce que** le trou traversant (150) est agencé sur l'extrémité avant (120) du châssis (110) de manière décentrée par rapport au dit bras (144).

6. Trottinette (100) selon l'une quelconque des revendications précédentes, **caractérisée en ce que** le châssis (110) comprend en outre une batterie et un moteur électrique agencés pour motoriser la trottinette.

7. Trottinette (100) selon l'une quelconque des revendications précédentes, **caractérisée en ce qu'**elle comprend en outre des moyens de communication sans fil.

8. Trottinette (100) selon l'une quelconque des revendications précédentes, **caractérisée en ce qu'**elle comprend en outre des moyens de localisation par satellite.

9. Trottinette (100) selon l'une quelconque des revendications précédentes, **caractérisée en ce que** le guidon (141) est pourvu d'un support pour appareil mobile (170) fixé à demeure.
